# EUROPÄISCHE PATENTSCHRIFT

(11) **EP 1 799 386 B1**
(45) Veröffentlichungstag und Bekanntmachung des Hinweises auf die Patenterteilung: **02.07.2008**
(21) Anmeldenummer: 05767952.4
(22) Anmeldetag: 11.07.2005
(51) Int. Cl.: B23D 51/02, B23D 49/16

(54) **FUßPLATTE FÜR EINE HANDHUBSÄGEMASCHINE**
BASE PLATE FOR A HAND-HELD JIG-SAW
PATIN POUR SCIE A MOUVEMENT ALTERNATIF MANUELLE

(30) Priorität: 21.09.2004 DE 102004045539
(43) Veröffentlichungstag der Anmeldung: 27.06.2007
(73) Patentinhaber: ROBERT BOSCH GMBH, 70442 Stuttgart (DE)
(72) Erfinder: DELFINI, Stefano, CH-2544 Bettlach (CH); SAEGESSER, Daniel, CH-4900 Langenthal (CH); RUOFF, Thomas, 75236 Kämpfelbach - Bilfingen (DE)
(86) Internationale Anmeldenummer: PCT/EP2005/053297
(87) Internationale Veröffentlichungsnummer: WO 2006/032551

(56) Entgegenhaltungen:
- EP-A- 0 970 771
- DE-A1- 3 509 515
- US-A- 1 445 820

## Beschreibung

### Stand der Technik

Die Erfindung geht aus von einer Fußplatte für eine Handhubsägemaschine nach dem Oberbegriff des Anspruchs 1.

Eine bekannte, handgeführte Stichsäge genannte Handhubsägemaschine (DE 101 19 561 A1) weist eine Pendelvorrichtung mit einem am Gehäuse der Stichsäge befestigten U-förmigen Halter und einer zwischen den Halterschenkeln angeordnete Stützrolle auf, die das Sägeblatt an dessen Sägeblattrücken abstützt. Die Stützrolle ist mit einer V-förmigen Nut versehen, in der der Sägeblattrücken aufgenommen ist. Um beim Sägevorgang ein seitliches Auslenken der Pendelvorrichtung quer zur Sägerichtung zu unterdrücken, ist ein Führungsmittel vorgesehen, das am Gehäuse der Stichsäge oder an einer der Auflage der Stichsäge auf dem zu sägenden Werkstück dienenden Fußplatte befestigt ist. Das Führungsmittel ist gabelförmig ausgebildet und trägt an den Gabelenden einander zugekehrte Führungsbacken, die am Halter der Pendelvorrichtung angreifen, und zwar im Bereich des Halters, in dem die Stützrolle angeordnet ist.

Eine bekannte, handgeführte Stichsäge (WO 02/22297 A1) weist eine Stützvorrichtung mit Stützrolle auf, die das Sägeblatt in Sägerichtung an dessen Sägeblattrücken abstützt und bei Bedarf in Sägerichtung pendelnd anzutreiben vermag. Um beim Sägevorgang ein seitliches Auslenken des Sägeblatts quer zur Sägerichtung zu unterbinden, besitzt die Stichsäge eine Führungsvorrichtung zur Führung und seitlichen Abstützung des Sägeblatts, die zwei an den voneinander abgekehrten Blattseiten des Sägeblatts anliegende Führungselemente und einen als Federantrieb ausgebildeten Stellmotor aufweist, mit dem der Abstand zwischen den Führungselementen auf die Sägeblattstärke eingestellt werden kann. Die Führungsvorrichtung ist im Maschinengehäuse integriert und tritt mit einer Schwenkhebelzange in Sägerichtung vor dem Sägeblatt aus dem Maschinengehäuse heraus. Die am Zangenende angeordneten Führungselemente greifen das Sägeblatt oberhalb der Fußplatte mit ihrer Durchtrittsöffnung für das Sägeblatt. Die Führungselemente sind als Wälzkörper oder Keramikteile ausgebildet. Die Führungsvorrichtung ist mit einer das Sägeblatt haltenden Einspannvorrichtung so gekoppelt, dass die Führungselemente mit Öffnen der Einspannvorrichtung von dem Sägeblatt abheben und mit Schließen der Einspannvorrichtung an die Blattseiten des Sägeblatts angelegt werden. Die Zangenschwenkhebel sind über ein Gelenk verbunden und greifen mit Führungsbolzen, die an ihren von den Führungselementen abgekehrten Hebelarmen abstehen, in Nuten eines Lagerbauteils ein, die in Längsrichtung des Sägeblatts leicht schräg unter einem Winkel kleiner 6° auseinanderlaufend ausgeführt sind. Beim Verschieben des Lagerbauteils werden die Zangenschwenkhebel über die Nutflanken und die Führungsbolzen geschwenkt. Am Lagerbauteil greifen zwei Druckfedern an, die das Lagerbauteil in Längsrichtung des Sägeblattes belasten und über die Nuten und Führungsbolzen die Zangenschwenkhebel so zu verstellen suchen, dass sich die Führungselemente auf den Zangenschwenkhebeln mit Federvorspannung an die Blattseiten des Sägeblatts anlegen.

Eine bekannte Stichsäge (DE 35 09 515 A1) weist eine Fußplatte, dort Sägetisch genannt, auf, in der eine zu der in Sägerichtung hinweisende Vorderseite offene Ausnehmung zur Durchführung des Sägeblattes vorhanden ist. Die Fußplatte ist aus einer Metallplatte und aus einer Kunststoff-Laufsohle in Gestalt einer ebenen Platte mit einem umlaufenden, nach oben abstehenden Randsteg, der die Metallplatte formschlüssig umschließt, zusammengesetzt. Metallplatte und Kunststoff-Laufsohle sind miteinander verschraubt. Im Bereich der Fußplatte ist das Sägeblatt durch Stabilisierungselemente seitlich geführt, die beidseits gegen die Flanken des Sägeblattes wirken. In einem Ausführungsbeispiel sind die Stabilisierungselemente zylindrisch oder Scheibenförmig ausgebildet und auf in der Fußplatte verankerten Stabilisierungsbolzen, deren Achsrichtung parallel zur Vorschubrichtung der Stichsäge verläuft exzentrisch gelagert. Durch Verdrehen der exzentrisch gelagerten Stabilisierungselemente um die Stabilisierungsachsen kann eine Anpassung ihres lichten Abstandes an die momentane Sägeblattdicke auf einfache Art und Weise erfolgen.

### Vorteile der Erfindung

Die erfindungsgemäße Fußplatte für eine Handhubsägemaschine mit den Merkmalen des Anspruchs 1 hat den Vorteil, dass durch die Integration der Führungsvorrichtung für das Sägeblatt in die Fußplatte der Handhubsägemaschine eine bauraumsparende Unterbringung der Führungsvorrichtung möglich ist, wobei durch die Anordnung der Führungsvorrichtung zwischen Grund- und Arbeitsplatte die Führungsvorrichtung in einem geschützten, mechanisch wenig anfälligen Einbauraum untergebracht ist. Durch die Ausbildung der Führungselemente als flache Scheibensegmente und das Vorsehen eines Schiebermechanismus zu deren Einstellung ist die Führungsvorrichtung sehr flach bauend und kann die Höhe der Fußplatte klein gehalten werden. Der über den Schiebermechanismus einstellbare Abstand der Scheibensegmente voneinander stellt sicher, dass alle Sägeblätter unabhängig von ihrer Blattstärke verschleißfrei und reibungsarm zwischen den Scheibensegmenten geführt werden.

Die erfindungsgemäße Fußplatte ermöglicht eine Nachrüstung älterer Handhubmaschinen, die noch nicht mit einer Führungsvorrichtung ausgestattet sind. Hierzu sind lediglich die Fußplatten auszutauschen, und die mit der neuen Fußplatte versehene Handhubsägemaschine liefert gleich gute Schnittergebnisse, wie die im Markt erhältlichen neuen Handhubsägemaschinen.

Durch die in den weiteren Ansprüchen aufgeführten Maßnahmen sind vorteilhafte Weiterbildungen und Verbesserungen der im Anspruch 1 angegebenen Fußplatte möglich.

### Zeichnung

Die Erfindung ist anhand eines in der Zeichnung dargestellten Ausführungsbeispiels im folgenden näher beschrieben. Es zeigen:
Fig. 1eine schematisiert perspektivische Ansicht einer Handhubsägemaschine mit einer Fußplatte zum Aufsetzen der Maschine auf ein zu sägendes Werkstück,
Fig. 2eine perspektivische Draufsicht einer Fußplatte mit Führungsvorrichtung für das Sägeblatt zum Ersetzen der Fußplatte der Handhubsägemaschine in Fig.1,
Fig. 3eine perspektivische Ansicht eines Schiebermechanismus der Führungsvorrichtung in Fig. 2,
Fig. 4 eine Explosionsdarstellung des Schiebermechanismus in Fig. 3.

### Beschreibung des Ausführungsbeispiels

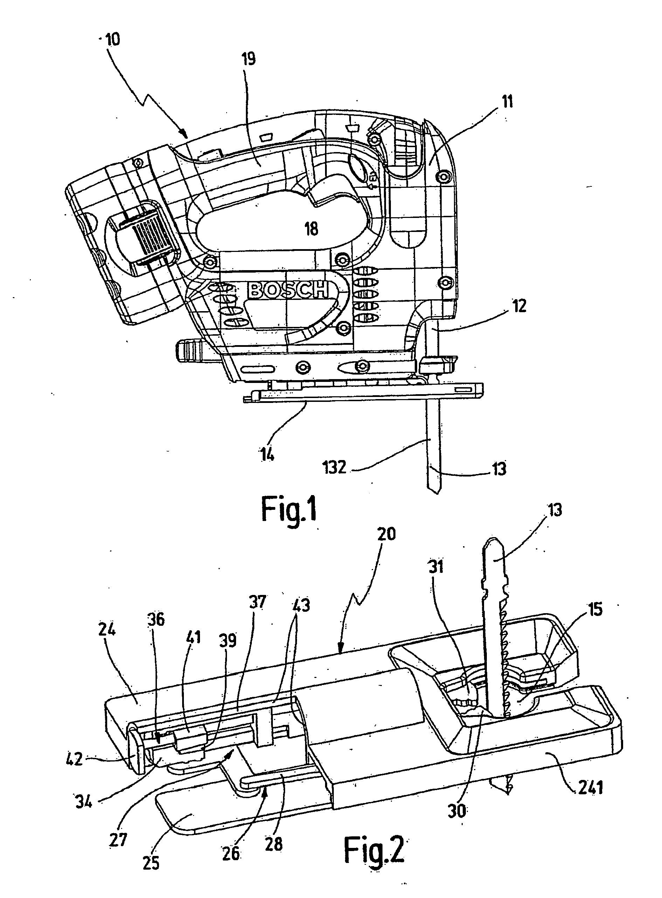

Die in Fig. 1 schematisiert in perspektivischer Ansicht zu sehende Handhubsägemaschine 10 weist ein Maschinengehäuse 11 auf, in dem ein Elektromotor mit einem Getriebe zum Antrieb einer Hubstange 12 in einer auf- und abwärts gerichteten Hubbewegung angeordnet ist. An der Hubstange 12 ist ein Sägeblatt 13, das eine Sägezahnleiste 131 und einen davon abgekehrten Sägeblattrücken 132 aufweist, mit seinem Einspannschaft lösbar eingespannt. Am Maschinengehäuse 11 ist eine Fußplatte 14 befestigt, die eine Durchtrittsöffnung 15 für das Sägeblatt 13 aufweist. Die Fußplatte 14 dient zum Aufsetzen der Handhubsägemaschine 10 auf ein Werkstück und zum Führen der Handhubsägemaschine 10 während des Sägevorgangs. Mit dem Sägeblattrücken 132 ist das Sägeblatt 13 an einer Stützrolle 16 abgestützt, die noch zusätzlich dem Sägeblatt 13 eine bedarfsweise zuschaltbare Pendelbewegung erteilen kann. Die Stützrolle 16 ist in einem Stützhalter 17 aufgenommen, der im Maschinengehäuse 11 festgelegt ist. Zum Ein- und Ausschalten des Elektromotors ist eine Drucktaste 18 vorgesehen, die an der Unterseite eines am Maschinengehäuse 11 ausgeformten Handgriffs 19 angeordnet ist. Da die Sägeblattspitze lose ist, wird beim Sägevorgang die Sägeblattspitze üblicherweise ausgelenkt, wodurch sich ein mangelnder Geradschnitt oder ein seitlich schräg verlaufender Schnitt im Werkstück ergibt. Dieser Effekt tritt insbesondere bei dickem Schnittmaterial auf und bedingt häufig einen Nachbearbeitungsgang.

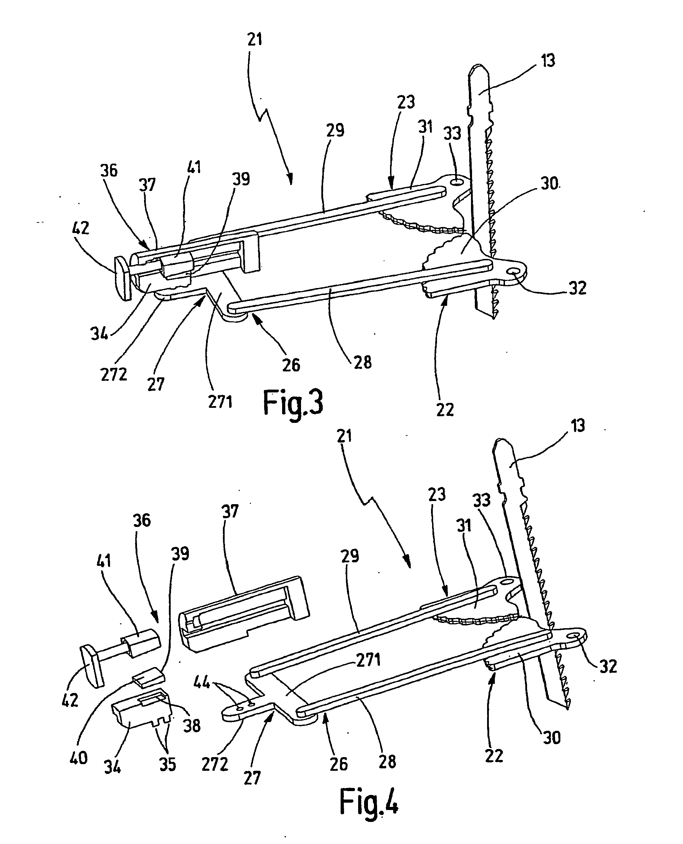

Um diesen Nachteil zu beseitigen wird die Fußplatte 14 in Fig. 1 durch eine in Fig. 2 in perspektivischer Draufsicht dargestellte Fußplatte 20 ersetzt, was durch einfaches Auswechseln der Fußplatte 14 am Maschinengehäuse 11 bewirkt werden kann. Die in Fig. 2 dargestellte Fußplatte 20 weist eine integrierte Führungsvorrichtung 21 mit zwei in ihre Durchtrittsöffnung 15 für das Sägeblatt 13 hineinragenden Führungselementen 22, 23 auf, die das Sägeblatt 13 auf voneinander abgekehrten Blattseiten des Sägeblatts 13 nahezu spiellos führen und abstützen und so ein seitliches Auslenken des Sägeblatts 13 verhindern. Zur Unterbringung der Führungsvorrichtung 21 ist die Fußplatte 20 aus einer Grundplatte 24 mit umlaufenden Rahmen 241 und einer ebenen Arbeitsplatte 25 zusammengesetzt. Die Führungsvorrichtung 21 ist zwischen Grundplatte 24 und Arbeitsplatte 25 angeordnet, und die Arbeitsplatte 25 ist in den Rahmen der Grundplatte 24 eingesetzt und darin befestigt. Die Führungsvorrichtung 21 weist einen Schiebermechanismus 26 auf, der aus einem T-förmigen Schieber 27 mit Quersteg 271 und Mittelsteg 272 und aus zwei an dem Quersteg 271 des Schiebers 27 mit Abstand voneinander angelenkten Schiebestangen 28, 29 besteht. Die Führungselemente 22, 23 sind als flache Scheibensegmente 30, 31 ausgebildet, die auf an der Durchtrittsöffnung 15 einander gegenüberliegenden Seiten der Fußplatte 20 an der Grundplatte 24 oder der Arbeitsplatte 25 um jeweils eine zur Fußplatte 20 rechtwinklig ausgerichtete Schwenkachse schwenkbar gelagert sind. Die Lagerpunkte der Scheibensegmente 30, 31 sind in Fig. 3 und 4 mit 32 und 33 bezeichnet. Im Abstand von dem Lagerpunkt 32 des Scheibensegments 30 ist die Schiebestange 28 und im Abstand vom Lagerpunkt 33 des Scheibensegments 30 ist die Schiebestange 29 angelenkt. Mit dem Mittelsteg 272 des T-förmigen Schiebers 27 ist ein Halteklotz 34 starr verbunden. Hierzu trägt beispielsweise der Halteklotz 34 zwei Zapfen 35, die formschlüssig in zwei Löcher 44 im Mittelsteg 272 eingreifen. Der Halteklotz 34 ist in einem Schaltgehäuse 37 in Richtung der Längsachse der Fußplatte 20 verschiebbar geführt und ist Teil einer Verriegelungseinheit 36, mit welcher der Schieber 27 in seiner jeweiligen Verschiebeposition arretiert werden kann. Der Halteklotz 34 weist eine Ausnehmung 38 auf, in der ein Keilstück 39 formschlüssig so eingesetzt ist, dass dessen Keilfläche von dem Halteklotz 34 wegweist und eine Auflauframpe 40 für einen ebenfalls im Schaltgehäuse 37 längsverschieblich geführten Klemmkeil 41 bildet. Der Klemmkeil 41 ist mit einem Verstellknopf 42 verbunden und vermag sich zwischen der Auflauframpe 40 am Halteklotz 34 und einer Gehäusewand des Schaltgehäuses 37 abzustützen.
Zwischen Klemmkeil 41 und Schaltgehäuse 37 ist eine hier nicht dargestellte Druckfeder angeordnet, die beim Ausziehen des Verstellknopfes 42, in Fig. 2 und 3 nach links, gespannt wird und eine Rückstellkraft für den Klemmkeil 41 erzeugt. Dadurch wird nach Freigeben des Verstellknopfes 42 der Klemmkeil 41 in jeder Position des Halteklotzes 34 auf die Auflauframpe 40 aufgeschoben und verklemmt sich zwischen Schaltgehäuse 37 und Keilstück 39, so dass der Halteklotz 34 und damit der Schieber 27 am Schaltgehäuse 37 unverschieblich festgelegt ist Das Schaltgehäuse 37 ist wie der Schiebermechanismus 26 zwischen der Grundplatte 24 und der Arbeitsplatte 25 gehalten.

Zum Einsetzen eines Sägeblatts 13 muss zuerst der gefederte Verstellknopf 42, der an der Fußplatte 20 zugänglich ist, aus der Grundplatte 24 herausgezogen werden. Dadurch werden die Anpresskräfte zwischen Klemmkeil 41 und Halteklotz 34 aufgehoben. Nunmehr kann der Halteklotz 34 gegriffen werden, wozu die Grundplatte 24 im Bereich des Schaltgehäuses 37 eine Aussparung 43 aufweist (Fig. 2). Wird der Halteklotz 34 in Fig. 2 und 3 nach links verschoben, so werden durch die damit verbundene Verschiebung des Schiebers 27 über die Schiebestangen 28, 29 die beiden Scheibensegmente 30 aus der Durchtrittsöffnung 15 ausgeschwenkt, wie dies in Fig. 2 und 3 zu sehen ist. Wird nunmehr der Verstellknopf 42 wieder losgelassen, so wird der Halteklotz 34 in dieser Position verriegelt. Die Durchtrittsöffnung 15 in der Fußplatte 20 ist freigegeben und ein Sägeblatt 13 kann durch die Durchtrittsöffnung 15 hindurch in die Hubstange 12 eingeführt und verspannt werden.

Nach Einspannen des Sägeblatts 13 wird erneut der Verstellknopf 42 aus der Grundplatte 24 herausgezogen, so dass der Halteklotz 34 wieder freigegeben ist, Nunmehr wird über den Halteklotz 34 der Schieber 27 in Fig. 2 und 3 soweit nach rechts verschoben, bis die durch die Schiebestangen 28 und 29 wieder ausschwenkenden Scheibensegmente 30, 31 sich an den voneinander abgekehrten Blattseiten des Sägeblatts 13 mehr oder weniger spiellos angelegt haben. In dieser Position des Halteklotzes 34 wird der Verstellknopf 42 freigegeben, und durch die Rückstellfeder verkeilt sich der Klemmkeil 41 auf der Auflauframpe 40 des Halteklotzes 34 und arretiert diesen in dieser Position. Damit sind auch die Scheibensegmente 30, 31 zum seitlichen Führen des Sägeblatts 13 fixiert.

## Patentansprüche

1. Fußplatte für eine Handhubsägemaschine (10) mit einer Durchtrittsöffnung (15) für ein von der Handhubsägemaschine (10) zu einer Hubbewegung antreibbares Sägeblatt (13) und mit einer integrierten Führungsvorrichtung (21), die in die Durchtrittsöffnung (15) hineinragende Führungselemente (22, 23) zum Führen und Abstützen des Sägeblatts (13) quer zu dessen Sägerichtung aufweist, deren quer zur Sägerichtung gesehener Abstand voneinander einstellbar ist, **dadurch gekennzeichnet, dass** die Führungsvorrichtung (21) zwischen einer zur Befestigung an der Handhubsägemaschine (10) ausgebildeten Grundplatte (24) mit Umlaufrahmen (241) und einer darin eingelegten und befestigten Arbeitsplatte (25) angeordnet ist, dass die Führungselemente (22, 23) als schwenkbare Scheibensegmente (30, 31) ausgebildet sind, die in an der Durchtrittsöffnung (15) einander gegenüberliegenden Bereichen der Grundplatte (24) und/oder Arbeitsplatte (25) um rechtwinklig zu Grund- und Arbeitsplatte (24, 25) ausgerichtete Schwenkachsen schwenkbeweglich gelagert sind, und dass zur Abstandseinstellung der Scheibensegmente (30, 31) die Führungsvorrichtung (21) einen Schiebermechanismus (26) aufweist, der einen in Sägerichtung verschiebbaren Schieber (27) und zwei mit Querabstand voneinander am Schieber (27) angelenkte Schiebestangen (28, 29) aufweist, die jeweils an einem Scheibensegment (30, 31) im Abstand von dessen Lagerpunkt (32, 33) angreifen.

2. Fußplatte nach Anspruch 1, **dadurch gekennzeichnet, dass** die Führungsvorrichtung (21) eine manuell lösbare Verriegelungseinheit (36) zur Arretierung des Schiebers (27) in dessen jeweiliger Verschiebeposition aufweist.

3. Fußplatte nach Anspruch 2, **dadurch gekennzeichnet, dass** die Verriegelungseinheit (36) einen an einem in Verschieberichtung des Schiebers (27) gegen die Kraft einer Rückstellfeder verschiebbaren Verstellknopf (42) mit einem daran befestigten Klemmkeil (41) und einen am Schieber (27) befestigten Halteklotz (34) mit einer in Verschieberichtung des Schiebers (27) sich erstreckenden Auflauframpe (40) für den Klemmkeil (41) aufweist, die mit der Keilfläche des Klemmkeils (41) zum Arretieren des Halteklotzes (34) zusammenwirkt.

4. Fußplatte nach Anspruch 3, **dadurch gekennzeichnet, dass** die Auflauframpe (40) an einem Keilstück (39) ausgebildet ist, das in einer Ausnehmung (38) im Halteklotz (34) formschlüssig einliegt.

5. Fußplatte nach Anspruch 3 oder 4, **dadurch gekennzeichnet, dass** der Klemmkeil (41) und der Halteklotz (34) in einem zwischen Grundplatte (24) und Arbeitsplatte (25) gehaltenen Schaltgehäuse (37) axial verschieblich geführt ist.

6. Fußplatte nach Anspruche 5, **dadurch gekennzeichnet, dass** die Rückstellfeder sich am Schaltgehäuse (37) und am Klemmkeil (41) abstützt.

7. Fußplatte nach Anspruch 5 oder 6, **dadurch gekennzeichnet, dass** die Grundplatte (24) im Bereich des Schaltgehäuses (37) eine Aussparung (43) aufweist, in der der Halteklotz (34) zur Verschiebung im Schaltgehäuse (37) greifbar ist.

8. Handhubsägemaschine mit einem Gehäuse (11) und einem motorisch zu einer Hubbewegung antreibbaren Sägeblatt (13), **gekennzeichnet durch** eine Fußplatte (20) nach einem der Ansprüche 1 bis 7.

## Claims

1. Base plate for a hand-held jig-saw (10), with a passage opening (15) for a saw blade (13), which can be driven to perform a reciprocating movement by the hand-held jig-saw (10), and with an integrated guide device (21) which has guide elements (22, 23) which project into the passage opening (15), are intended for guiding and supporting the saw blade (13) transversely with respect to its sawing direction, and the distance of which from each other, as seen transversely with respect to the sawing direction, is adjustable, **characterized in that** the guide device (21) is arranged between a bed plate (24), which is designed for fastening on the hand-held jig-saw (10) and has a peripheral frame (241), and a working plate (25) which is placed and fastened in said bed plate, **in that** the guide elements (22, 23) are designed as pivotable disc segments (30, 31) which are mounted in regions, which lie opposite each other at the passage opening (15), of the bed plate (24) and/or working plate (25) in a manner such that they are pivotable about pivot axes oriented at right angles to the bed plate and working plate (24, 25), and **in that**, in order to adjust the distance between the disc segments (30, 31), the guide device (21) has a slide mechanism (26) which has a slide (27), which is displaceable in the sawing direction, and two slide bars (28, 29) which are coupled to the slide (27) at a transverse distance from each other and each act on one disc segment (30, 31) at a distance from the bearing point (32, 33) thereof.

2. Base plate according to Claim 1, **characterized in that** the guide device (21) has a manually releasable locking unit (36) for locking the slide (27) in the respective displacement position thereof.

3. Base plate according to Claim 2, **characterized in that** the locking unit (36) has an adjustment knob (42) which is displaceable in the displacement direction of the slide (27) counter to the force of a resetting spring and has a clamping wedge (41) fastened to it, and a retaining block (34) which is fastened to the slide (27) and has a run-on ramp (40) for the clamping wedge (41), which run-on ramp extends in the displacement direction of the slide (27) and interacts with the wedge surface of the clamping wedge (41) in order to lock the retaining block (34).

4. Base plate according to Claim 3, **characterized in that** the run-on ramp (40) is formed on a wedge piece (39) which rests in a form-fitting manner in a recess (38) in the retaining block (34).

5. Base plate according to Claim 3 or 4, **characterized in that** the clamping wedge (41) and the retaining block (34) are guided in an axially displaceable manner in a connecting housing (37) held between bed plate (24) and working plate (25).

6. Base plate according to Claim 5, **characterized in that** the resetting spring is supported on the connecting housing (37) and on the clamping wedge (41).

7. Base plate according to Claim 5 or 6, **characterized in that** the bed plate (24) has, in the region of the connecting housing (37), a cut-out (43) in which the retaining block (34) can be grasped for displacement in the connecting housing (37).

8. Hand-held jig-saw with a housing (11) and a saw blade (13) which can be driven by motor to perform a reciprocating movement, **characterized by** a base plate (20) according to one of Claims 1 to 7.

## Revendications

1. Patin de scie sauteuse manuelle (10) comportant un orifice de passage (15) pour une lame de scie (13) entraînée suivant un mouvement alternatif de la scie sauteuse (10) ainsi qu'un dispositif de guidage (21), intégré, comportant des éléments de guidage (22, 23) venant dans l'orifice de passage (15) pour guider et soutenir la lame de scie (13), transversalement à la direction de sciage, et dont l'écartement transversal à la direction de sciage, est réglable,
**caractérisé en ce que**
le dispositif de guidage (21) est installé entre une plaque de base (24) destinée à être fixée à la scie sauteuse (10), et ayant un cadre périphérique (241) et une plaque de travail (25) placée dans ce cadre et fixée à celui-ci,
les éléments de guidage (22, 23) sont des éléments en forme de disques (30, 31), pivotants, montés de façon mobile en pivotement sur des zones de la plaque de base (24) qui se font face au niveau de l'orifice de passage (15) et/ou de la plaque de travail (25), de façon à pivoter autour de l'axe de pivotement perpendiculaire à la plaque de base et à la plaque de travail (24, 25), et
pour régler la distance des segments de disques (30, 31), le dispositif de guidage (21) comporte un mécanisme à poussoir (26) comportant un poussoir (27) coulissant dans la direction de sciage et deux bielles (28, 29) articulées au tiroir (27) en étant écartées avec un écart transversal, ces biellettes étant reliées chacune à un segment en forme de disque (30, 31) à distance de son point de pivotement (32, 33).

2. Patin selon la revendication 1,
**caractérisé en ce que**
le dispositif de guidage (21) comporte une unité de verrouillage (36) à libération manuelle pour bloquer le tiroir (27) dans sa position de coulissement respective.

3. Patin selon la revendication 2,
**caractérisé en ce que**
l'unité de verrouillage (36) comporte un bouton de réglage (42) coulissant contre la force d'un ressort de rappel dans la direction de coulissement du coulisseau (27), ce bouton de réglage portant un coin de serrage (41) et un bloc de retenue (34) fixé au coulisseau (27) et ayant une rampe (40) s'étendant dans la direction de coulissement du tiroir (27) pour le coin de serrage (41) coopérant avec la surface en forme de coin du coin de serrage (41) pour bloquer le bloc de retenue (34).

4. Patin selon la revendication 3,
**caractérisée en ce que**
la rampe (40) forme une pièce en coin (39) qui s'applique par une liaison par la forme dans une cavité (38) du bloc de retenue (34).

5. Patin selon la revendication 3 ou 4,
**caractérisé en ce que**
la pièce en forme de coin (41) et le bloc de retenue (34) sont guidés en coulissement axial dans un boîtier de commutation (37) tenu entre la plaque de base (24) et la plaque de travail (25).

6. Patin selon la revendication 5,
**caractérisé en ce que**
le ressort de rappel s'appuie contre le boîtier de commutation (37) et contre la pièce en forme de coin (41).

7. Patin selon la revendication 5 ou 6,
**caractérisé en ce que**
la plaque de base (24) comporte une cavité (43) au niveau du boîtier de commutation (37) dans la quelle on peut atteindre le bloc de retenue (34) pour coulisser dans le boîtier de commutation (37).

8. Scie sauteuse comportant un boitier (11) et une lame de scie (13) entraînée par un moteur suivant un mouvement alternatif,
**caractérisée par**
un patin (20) selon l'une des revendications 1 à 17.
